# EUROPÄISCHE PATENTSCHRIFT

(11) **EP 2 028 575 B1**
(45) Veröffentlichungstag und Bekanntmachung des Hinweises auf die Patenterteilung: **07.09.2011**
(21) Anmeldenummer: 08104721.9
(22) Anmeldetag: 11.07.2008
(51) Int. Cl.: G05B 19/418, H04L 12/58

(54) **Verfahren zum Auslesen und/oder Schreiben von Eigenschaften oder Parametern eines an ein Bussystem angeschlossenen Installationsgerätes**
Method for reading and/or writing characteristics or parameters of an installation device connected to a bus system
Procédé de lecture et/ou d'écriture de propriétés ou de paramètres d'un appareil d'installation connecté à un système de bus

(30) Priorität: 23.08.2007 DE 102007039920
(43) Veröffentlichungstag der Anmeldung: 25.02.2009
(73) Patentinhaber: Siemens Aktiengesellschaft, 80333 München (DE)
(72) Erfinder: Ferstl, Peter, 93053 Regensburg (DE); Hoch, Peter, 93080 Pentling (DE); Langels, Hans-Joachim, 84085 Langquaid (DE)

(56) Entgegenhaltungen:
- NINGBO FENG ET AL: "Research of EIB and development of application module" INTELLIGENT CONTROL AND AUTOMATION, 2004. WCICA 2004. FIFTH WORLD CONG RESS ON HANGZHOU, CHINA 15-19 JUNE 2004, PISCATAWAY, NJ, USA,IEEE, US, Bd. 6, 15. Juni 2004 (2004-06-15), Seiten 5375-5377, XP010731383 ISBN: 978-0-7803-8273-2
- MARTIN KÖGLER: "Free Development Environment for Bus Coupling Units of the European Installation Bus"[Online] 31. August 2005 (2005-08-31), Seiten 1-175, XP002506545 Gefunden im Internet: URL:http://www.mirrorservice.org/sites/dow nload.sourceforge.net/pub/sourceforge/b/bc /bcusdk/sdkdoc.pdf> [gefunden am 2008-12-02]
- CEZARY SZCZEGIELNIAK , MARKUS A. WISCHY: "Using FGAG to export ETS data for Visualization" SIEMENS AG, CT SE 2, CORPORATE TECHNOLOGY, SOFTWARE & ENGINEERING - ARCHITECTURE, [Online] September 2005 (2005-09), Seiten 1-8, XP002506546 Munich, Germany Gefunden im Internet: URL:http://www.knx.org/fileadmin/downloads /05%20-%20KNX%20Partners/03%20-%20Becoming %20a%20KNX%20Scientific%20Partner/2005-09% 20Scientific%20Conference%20Papers%20Pisa/ 13_UFGAG%20to%20export%20ETS%20data%20for% 20Visualization.pdf> [gefunden am 2008-12-03]

## Beschreibung

Die vorliegende Erfindung betrifft ein Verfahren zum Auslesen und/oder Schreiben von Eigenschaften oder Parametern eines an ein Bussystem angeschlossenen Installationsgerätes, dem über eine Programmiereinrichtung mittels einer Programmiersoftware eine individuelle Adresse zugeordnet wurde, insbesondere von Eingangs- und/oder Ausgangswerten eines an ein Bussystem angeschlossenen Installationsgerätes.

Höhere Anforderungen an Flexibilität und Komfort der Elektroinstallation, verbunden mit dem Wunsch nach Minimierung des Energiebedarfes, haben zur Entwicklung der Gebäudesystemtechnik geführt. Dem darin verwendeten Bussystem liegt ein gemeinsames europäisches Konzept zugrunde, der European Installation Bus (KNX *EIB*). Informationen zum Europäischen Installations-Bus enthält z. B. der Prospekt "Europäischer Installations-Bus: Technische Informationen", European Installations Bus Association (EIBA), Brüssel, 259900/66006 Wü 7/99 2.5.

Durch ein derartiges Bussystem lassen sich alle betriebstechnischen Funktionen und Abläufe über eine gemeinsame Leitung steuern, überwachen und melden. Dadurch kann die Energiezuleitung ohne Umwege direkt zu den Verbrauchern, d.h. den Installationsgeräten, geführt werden. Ein weiterer Vorteil eines derartigen Bussystems ist, dass sich die Elektroinstallation in einem Gebäude wesentlich einfacher realisieren, später problemlos erweitern und modifizieren lässt.

Bei einer Nutzungsänderung oder Änderung der Raumaufteilungen kann eine schnelle und problemlose Anpassung des Bussystems durch einfache Neuzuordnung, d.h. Umparametrierung, der Busteilnehmer erfolgen, ohne dass Leitungen neu verlegt werden müssen. Diese Neuzuordnung wird z. B. mit Hilfe eines am Bussystem angeschlossenen Computers und der darauf installierten Projektierungs- und Inbetriebnahme-Software ETS (Engineering Tool Software) durchgeführt, die bereits für die Erstinbetriebnahme benötigt wird.

Über eine Programmiereinrichtung mittels einer Programmiersoftware wird dem an das Bussystem angeschlossenen Installationsgerät eine individuelle Adresse zugeordnet wird. Die individuelle Adresse ist eine Nummerierung zur eindeutigen Identifikation eines Installationsgerätes, bzw. eines Busteilnehmers.

Die individuelle Adresse wird in der Regel bei der Inbetriebnahme des Installationsgerätes durch eine Programmiersoftware, beispielsweise die ETS, festgelegt. Jedes Installationsgerät erhält dabei eine individuelle Adresse, anhand der das Installationsgerät eindeutig gekennzeichnet ist.

Installationsgeräte eines Bussystems senden und empfangen Daten üblicherweise über sogenannte Kommunikationsobjekte. Diese werden bei der klassischen EIB Projektierung durch den Anwender mit bestimmten Gruppenadressen verbunden. Nach der Programmierung der Geräte löst ein Bustelegramm an die jeweilige Gruppenadresse die dem Kommunikationsobjekt zugeordnete Aktion aus.

Die Aktionen und Anzahl der Kommunikationsobjekte unterscheiden sich meist mit dem Wechsel der Applikation des EIB Installationsgerätes. Kommunikationsobjekte können Daten empfangen oder senden. Aktionen von Kommunikationsobjekten sind z.B. Schalten, Dimmen, Status melden, Wert empfangen, Wert senden usw. Ein einfacher Schaltaktor benötigt für seine Aufgabe oft nur ein Kommunikationsobjekt (Schalten), während ein Dimmaktor schon mehrere Kommunikationsobjekte verwendet (Schalten, Dimmen, Wert). Dies bedeutet, dass mehrere Kommunikationsobjekte einer Funktion angehören können. Auch wenn es sich z.B. um einen mehrfach Aktor/Sensor handelt, sind jedem Ausgang/Eingang bestimmte Kommunikationsobjekte zugeordnet, die zusammen gehören.

Das Auslesen eines Installationsgerätes bzw. eines Kommunikationsobjektes eines Installationsgerätes erfolgt über eine dem Kommunikationsobjekt zugewiesene Gruppenadresse. Der Wert des Installationsgerätes bzw. des Kommunikationsobjektes des Installationsgerätes wird über diese Gruppenadresse zurückgeliefert, wenn das Lesen-Flag des Kommunikationsobjektes gesetzt ist.

Mit der heute verfügbaren Gebäudesystemtechnik und der Projektierungs- und Inbetriebnahme-Software (ETS) kann der Status von Ausgängen und Eingängen eines Installationsgerätes nur dann ausgelesen werden, wenn es ein Kommunikationsobjekt für den jeweiligen Ausgang bzw. Eingang gibt und diesem Kommunikationsobjekt auch eine Gruppenadresse zugewiesen wurde. Der Wert des Kommunikationsobjektes gibt dabei an, wie der Ausgang, beispielsweise eines Schalters, eines Dimmers oder einer Alarmanlage, geschaltet ist. Bei einem Kommunikationsobjekt "Lichtschalter" kann dieses beispielsweise die Werte "ein" oder "aus" annehmen. Dies besagt, ob das dem Kommunikationsobjekt "Lichtschalter" zugeordnete Lichtelement einoder ausgeschaltet ist.

Häufig wird jedoch der Wert eines Kommunikationsobjektes nur für die Inbetriebnahme zur Anlagendiagnose und nicht im Betrieb des Gerätes benötigt. Die Zuweisung einer Gruppenadres se bedeutet hier einen zusätzlichen Aufwand. In großen Anlagen wird darüber hinaus eine sehr große Anzahl von Stati an das Gebäudemanagementsystem übertragen. Hierfür werden sehr viele Gruppenadressen benötigt. Der Adressraum ist jedoch auf rund 32760 Gruppenadressen eingeschränkt, so dass sehr schnell die Grenzen des Systems erreicht werden.

So ist aus der Artikel "Research of EIB and development of application module" INTELLIGENT CONTROL AND AUTOMATION, 2004. WCICA 2004. FIFTH WORLD CONG RESS ON HANGZHOU, CHINA 15-19 JUNE 2004, PISCATAWAY, NJ, USAJEEE, US, Bd. 6, 15. Juni 2004 (2004-06-15), Seiten 5375-5377, XP010731383 ISBN: 978-0-7803-8273-2, ein Europäischen Installation Bus (EIB) bekannt, bei dem Kommunikationsobjekte für die Kommunikation verwendet werden. Die Kommunikationsobjekte sind in Tabellen gespeichert, wobei die Kommunikationsobjekte Datenstrukturen darstellen, die Informationen, wie den Status oder den Wert, des EIB-Gerätes beinhalten. Dabei gibt es Kommunikationsobjekte die senden und solche die empfangen können. Sobald ein sendendes Kommunikationsobjekt wechselt, erzeugt die Systemsoftware ein entsprechendes Gruppentelegramm und überträgt dieses zu allen Geräten, die zu ein und derselben Gruppe gehören. In allen Geräten, die dieses Gruppentelegramm erhalten haben, wird das entsprechende Kommunikationsobjekt auf den neuesten Stand gebracht. Ein Kommunikationsobjekt kann seine Daten von mehr als einer Gruppenadresse empfangen, aber sein Wert kann nur durch eine einzige Gruppenadresse gesendet werden. Dabei können mehr als ein Kommunikationsobjekt in einem Gerät zu derselben Gruppenadresse verbunden sein. Eine Systemsoftware kann ein entsprechendes Gruppentelegramm erzeugen und dieses zu allen Geräten, die zu ein und derselben Gruppe gehören, übertragen. Hierzu muss die Systemsoftware wissen, welche Gruppenadresse zu einen Kommunikationsobjekt gehört, um einen Kommunikationsobjektwert durch ein Gruppentelegramm zu senden.

Aus dem Artikel "Free Development Environment for Bus Coupling Units of the European Installation Bus"[Online] 31. August 2005 (2005-08-31), Seiten 1-175, XP002506545", ist der Kommunikationsbetrieb eines EIB-Busses offenbart. Auch hier ist beschrieben, dass ein Datenaustausch zwischen Busgeräten über Gruppenadressen erfolgt, wobei jeder Endpunkt einer Gruppenkommunikation als Gruppenobjekt oder Kommunikationsobjekt bezeichnet wird.

Ferner ist bekannt, dass der Wert eines Kommunikationsobjektes ausgelesen werden kann, indem auf die Speicherstelle per so genannten MemoryRead-Dienst zugegriffen wird. Nachteilig hierbei ist, dass die Speicherstelle, in der der Wert angelegt ist, bekannt sein muss. Normalerweise ist diese Speicherstelle jedoch nur dem Hersteller bekannt. Dies ist insbesondere dann nachteilig, wenn unterschiedliche Installationsgeräte unterschiedlicher Hersteller verwendet werden. Diese Lösung funktioniert auch nicht bei allen Installationsgeräten, da zum Teil die Speicheradresse nicht fixiert werden kann.

Zum Auslesen und/oder Schreiben des Wertes eines Kommunikationsobjektes ohne die Zuweisung einer Gruppenadresse sind entsprechende Betriebssystemdienste hinreichend bekannt und allgemein definiert. So können über einen Lesebefehl eines derartigen Dienstes, z.B. "PropertyRead", die Eigenschaften oder Parameter des Installationsgerätes oder der Wert eines Kommunikationsobjektes des Installationsgerätes ausgelesen werden. Ferner können über einen Schreibbefehl eines derartigen Dienstes, z.B. "PropertyWrite", die Eigenschaften oder Parameter des Installationsgerätes geändert werden. Diese Dienste erfordern jedoch eine explizite Anlage der Eigenschaften und die Verknüpfung mit der Speicherstelle des Wertes eines Kommunikationsobjektes.

Bei den bekannten Verfahren zum Auslesen und/oder Schreiben von Eigenschaften oder Parametern eines an ein Bussystem angeschlossenen Installationsgerätes wird ein Wert, der über ein gruppenadressiertes Telegramm bzw. Eigenschaftstelegramm empfangen wird, über eine Gruppenadresstabelle und eine Assoziationstabelle auf ein oder mehrere Kommunikationsobjekte geschrieben. Dabei wird über einen Eintrag in der Kommunikationstabelle bestimmt, wohin der Wert in der Speichereinheit des Installationsgerätes geschrieben werden soll. Gleichzeitig wird einem Anwendungsprogramm mit dem Setzen eines oder mehrerer Flags signalisiert, dass ein neuer Wert für dieses Kommunikationsobjekt empfangen wurde.

Ein Eigenschaftsobjekt und die Zuordnung dieses Eigenschaftsobjektes zu einer Speichereinheit des Installationsgerätes mit dem Wert eines Kommunikationsobjektes muss heutzutage explizit vom Hersteller vorgegeben werden, d.h. bei der Erstellung eines Anwendungsprogramms entsprechend angelegt werden. Ist ein solches Eigenschaftsobjekt entsprechend angelegt, wird ein Wert, der über einen Eigenschaftsobjektdienst empfangen wurde, in die Speichereinheit geschrieben, jedoch werden die Kommunikationsflags nicht verändert. Damit kann ein Anwendungsprogramm nicht erkennen, dass ein Kommunikationsobjekt einen neuen Wert angenommen hat.

Es besteht der Bedarf, ohne die Zuweisung von Gruppenadressen den Wert von Kommunikationsobjekten auszulesen bzw. an einen anderen Busteilnehmer zu übertragen. Ferner soll zu Diagnosezwecken auch eine gezielte Manipulation von Eingangswerten und Parametern in bestimmten Installationsgeräten ermöglicht werden können.

Aufgabe der Erfindung ist es daher, ein Verfahren zum einfachen und schnellen Auslesen und/oder Schreiben von Eigenschaften oder Parametern eines an ein Bussystem angeschlossenen Installationsgerätes, insbesondere des Wertes eines Kommunikationsobjektes eines an ein Bussystem angeschlossenen Installationsgerätes zu schaffen, ohne dass dem Kommunikationsobjekt eine individuelle Gruppenadresse zugeordnet werden muss.

Diese Aufgabe wird erfindungsgemäß durch ein Verfahren mit den Merkmalen gemäß dem unabhängigen Patentanspruch 1 gelöst. Weitere Merkmale und Details der Erfindung ergeben sich aus den Unteransprüchen, der Beschreibung sowie den Zeichnungen.

Die Aufgabe der Erfindung wird durch ein Verfahren zum Auslesen und/oder Schreiben von Eigenschaften oder Parametern eines an ein Bussystem angeschlossenen Installationsgerätes, dem über eine Programmiereinrichtung mittels einer Programmiersoftware eine individuelle Adresse zugeordnet wurde, insbesondere des Wertes eines Kommunikationsobjektes eines an ein Bussystem angeschlossenen Installationsgerätes, gelöst, wobei das Verfahren durch folgende Schritte gekennzeichnet ist:
a) in das Betriebssystem des Installationsgerätes wird ein Eigenschaftsobjektdienst implementiert, der die in einer Speichereinheit des Installationsgerätes gespeicherten Eigenschaften oder Parameter des Installationsgerätes, insbesondere die Anzahl und Art der Kommunikationsobjekte des Installationsgerätes und/oder den Wert der Kommunikationsobjekte des Installationsgerätes, auslesen und/oder beschreiben kann;
b) Anlegen eines Eigenschaftsobjektes für die Kommunikationsobjekte des Installationsgerätes, wobei das Eigenschaftsobjekt mit der Speichereinheit des Installationsgerätes verknüpft ist,
c) nach Empfang eines Wertes für ein Kommunikationsobjekt durch den Eigenschaftsobjektdienst schreibt der Eigenschaftsobjektdienst anhand von Einträgen in dem Eigenschaftsobjekt den empfangenen Wert in die für das Kommunikationsobjekt vorgesehenen Speicherstelle in der Speichereinheit und setzt ein Flag zur Steuerung des Zugriffs auf den Wert des Kommunikationsobjektes.

In das Betriebssystem des Installationsgerätes wird zunächst ein neuartiger Eigenschaftsobjektdienst implementiert. Dieser Eigenschaftsobjektdienst ist in der Lage die in einer Speichereinheit des Installationsgerätes gespeicherten Eigenschaften oder Parameter des Installationsgerätes, insbesondere die Anzahl und Art der Kommunikationsobjekte des Installationsgerätes und/oder den Wert der Kommunikationsobjekte des Installationsgerätes, auszulesen und/oder zu beschreiben. Das Eigenschaftsobjekt stellt eine Tabelle dar, die auf die in dem Installationsgerät vorhandenen Kommunikationsobjekte zeigt bzw. auf diese verweist. Hierzu ist das Eigenschaftsobjekt mit der Speichereinheit des Installationsgerätes verzweigt. Wird ein Wert für ein Kommunikationsobjekt, der über ein Telegramm gesendet wurde, empfangen, schreibt der Eigenschaftsobjektdienst anhand von Einträgen in dem Eigenschaftsobjekt den empfangenen Wert in die für das Kommunikationsobjekt vorgesehenen Speicherstelle in der Speichereinheit. Damit der Eigenschaftsobjektdienst den empfangenen Wert für ein Kommunikationsobjekt an die richtige Speicherstelle in der Speichereinheit schreibt, d.h. dem richtigen Kommunikationsobjekt zuordnet, greift der Eigenschaftsobjektdienst auf das Eigenschaftsobjekt, d.h. die Tabelle mit einer Verzweigerungsstruktur, zurück. Ferner setzt der Eigenschaftsobjektdienst ein entsprechendes Flag zur Steuerung des Zugriffs auf den Wert des Kommunikationsobjektes.

Durch ein gesetztes Flag wird die Eigenschaft eines Kommunikationsobjektes aktiviert. Ein Kommunikationsflag legt beispielsweise fest, ob das Kommunikationsobjekt überhaupt mit dem Bus, d.h. mit der Busleitung des Bussystems, kommuniziert. Ist das Lese-Flag gesetzt, antwortet das Kommunikationsobjekt auf eine Leseanforderung vom Bus. Das Schreib-Flag oder auch Empfangen-Flag erlaubt das Beschreiben vom Bus, während das Senden-Flag ermöglicht, dass der Wert eines Kommunikationsobjektes auf den Bus freigegeben wird, wenn sich der Wert im Kommunikationsobjekt ändert.

Das Betriebssystem des Installationsgerätes wird so erweitert, dass automatisch für die Kommunikationsobjekte ein Eigenschaftsobjekt angelegt wird. Die Implementierung des Eigenschaftsobjektdienstes in das Betriebssystem des Installationsgerätes ermöglicht es, dass bei Empfang eines Wertes über einen Eigenschaftsobjektdienst nicht nur der Wert des Kommunikationsobjektes, sondern auch das Flag oder die Flags im Kommunikationsobjekt gesetzt werden können.

Durch dieses Verfahren ist es möglich, dass ein Anwendungsprogramm den Wert eines Kommunikationsobjektes auch dann auswertet, wenn dieser Wert nur über den Eigenschaftsobjektdienst geändert wurde. Wenn beispielsweise ein oberer Druckpunkt eines Tasters betätigt wurde, d.h. der Taster eingeschaltet worden ist, wird dies durch das Anwendungsprogramm ausgewertet und der Wert 1 für das Einschalten des Tasters durch das Anwendungsprogramm in die entsprechende Speicherstelle der Speichereinheit für das Kommunikationsobjekt geschrieben. Das Anwendungsprogramm setzt ferner das Senden-Flag, so dass die Wertänderung des Kommunikationsobjektes auf den Bus übertragen werden kann. Durch den Eigenschaftsobjektdienst kann der Wert eines Kommunikationsobjektes ausgelesen werden, ohne dass dem Kommunikationsobjekt eine Gruppenadresse zugewiesen worden ist.

Durch dieses Verfahren, d.h. durch die Implementierung des Eigenschaftsobjektdienstes in das Betriebssystem des Installationsobjektes können die Flags, ähnlich wie bei den bekannten Kommunikationsobjektdiensten, zur Steuerung des Zugriffs auf den Wert des Kommunikationsobjektes gesetzt werden. D.h., die Flags zeigen an, ob ein Wert vom Bus empfangen wurde (Empfangen-Flag) oder ob ein Wert auf den Bus gesendet werden soll (Senden-Flag). Ohne diese Flags wird von einem Anwendungsprogramm nicht erkannt, dass ein neuer Wert in die Speichereinheit des Installationsgerätes geschrieben wurde. Heute bekannte Eigenschaftsdienste verändern die Flags nicht. Die bekannten Kommunikationsobjektdienste nutzen die Gruppenadresse zum Senden und Empfangen von Telegrammen auf den Bus des Bussystems. Vorteil bei dem obigen Verfahren ist, dass keine Gruppenadressen vergeben werden müssen. Dies erspart erheblichen Aufwand bei der Installation der Installationsgeräte. Über eine Programmiereinrichtung und mittels einer Programmiersoftware muss lediglich dem Installationsgerät eine individuelle Adresse zugeordnet werden. Die Werte des oder der Kommunikationsobjekte(s) des Installationsgerätes können durch die Implementierung des Eigenschaftsobjektdienstes und das Anlegen, insbesondere das automatische Anlegen, eines Eigenschaftsobjektes einfach ausgelesen werden, ohne dass den Kommunikationsobjekten Gruppenadressen zugeteilt worden sind.

Bevorzugt ist ferner ein Verfahren, bei dem dem Betriebssystem des Installationsgerätes eine allgemeine vordefinierte Systemgruppenadresse zugeordnet wird und bei dem der Eigenschaftsobjektdienst nach der Feststellung, dass in der Speichereinheit ein Sende-Flag für ein Kommunikationsobjekt gesetzt worden ist, automatisch ein Eigenschaftstelegramm auf die Busleitung des Bussystems sendet, wobei in dem Eigenschaftstelegramm die geänderte Eigenschaft oder der geänderte Parameter, insbesondere der geänderte Wert des Kommunikationsobjektes, die individuelle Adresse des Installationsgerätes und die allgemein vordefinierte Systemgruppenadresse übertragen werden.

Das Betriebssystem wird dadurch derart erweitert, dass der Eigenschaftsobjektdienst den Wert eines Kommunikationsobjektes auf eine allgemein vordefinierte Systemgruppenadresse sendet, wenn das entsprechende Flag zum Senden gesetzt wurde. Vorzugsweise findet dieses Senden nur dann automatisch auf die allgemeine vordefinierte Systemgruppenadresse statt, wenn dem Kommunikationsobjekt keine Gruppenadresse zugewiesen wurde. Bei Geräten, deren Kommunikationsobjekte vorzugsweise in Anzahl und Anordnung identisch ist, kann der Eigenschaftsobjektdienst auch so verwendet werden, dass der Wert eines Kommunikationsobjektes über den Eigenschaftsobjektdienst mit der allgemeinen vordefinierten Systemgruppenadresse an alle anderen Installationsgeräte übertragen wird, ohne dass den Kommunikationsobjekten der Installationsgeräte Gruppenadressen zugewiesen worden sein müssen.

Bislang war lediglich bekannt, dass wenn keine Gruppenadresse zugewiesen wurde, auch kein Wert eines Kommunikationsobjektes auf den Bus gesendet werden konnte. Dies konnte auch dann nicht erfolgen, wenn der Wert eines Kommunikationsobjektes von einem Anwendungsprogramm geändert wurde und ein Flag gesetzt wurde. Ohne eine zugeordnete Gruppenadresse konnte bis dato das Senden des Wertes eines Kommunikationsobjekt nicht eingeleitet werden.

Bei einer Änderung von Eigenschaften und Parametern, insbesondere des Wertes eines Kommunikationsobjektes sendet der Eigenschaftsobjektdienst automatisch ein Eigenschaftstelegramm auf den Bus, wobei in dem Eigenschaftstelegramm die geänderte Eigenschaft oder der geänderte Parameter, insbesondere der geänderte Wert des Kommunikationsobjektes, dies kann ein Eingangs- oder Ausgangwert sein, die individuelle Adresse des Installationsgerätes und die allgemein vordefinierte Systemgruppenadresse übertragen werden.

Ein derartiges Verfahren ermöglicht das einfache und schnelle Auslesen des Wertes eines Kommunikationsobjektes eines an ein Bussystem angeschlossenen Installationsgerätes, ohne dass dem Installationsgerät eine individuelle Gruppenadresse zugeordnet wird. Diese Art des Auslesens des Wertes erspart eine Menge Aufwand, da nicht jedem Kommunikationsobjekt eines an das Bussystem angeschlossenen Installationsgerätes eine individuelle Gruppenadresse über eine Inbetriebnahme-Software, insbesondere die ETS, zugeordnet werden muss. Der Empfänger des Eigenschaftstelegramms, beispielsweise der Installateur des Bussystems oder ein anderer Busteilnehmer, kann aus der individuellen Adresse und dem übermittelten Wert erkennen, von welchem Installationsgerät, d.h. von welchem Busteilnehmer, welcher Wert auf die Busleitung des Bussystems gesendet worden ist.

Als Eigenschaften oder Parameter, können neben dem Wert eines Kommunikationsobjektes, Adresstabellen, Objekte oder Basisfunktionen des Installationsgerätes ausgelesen werden.

Dieses Verfahren ist selbstverständlich nicht auf das Auslesen von Eigenschaften oder Parameter eines Installationsgerätes, insbesondere den Wert eines Kommunikationsobjektes eines Installationsgerätes beschränkt. Durch dieses Verfahren können sämtliche Eigenschaften oder Parameter aller an das Bussystem angeschlossenen Installationsgeräte, insbesondere alle Werte aller Kommunikationsobjekte der an das Bussystem angeschlossenen Installationsgeräte ausgelesen werden.

Durch die Verwendung von Eigenschaftsobjektdiensten zum Auslesen der Werte der Kommunikationsobjekte eines Installationsgerätes muss keine installationsgerätespezifische Gruppenadresse vergeben werden, um Rückwirkungen zu vermeiden.

Des Weiteren ist ein Verfahren bevorzugt, bei dem der Eigenschaftsobjektdienst nach der Feststellung einer Änderung von Eigenschaften und Parametern, insbesondere des Wertes eines Kommunikationsobjektes, automatisch ein Eigenschaftstelegramm auf die Busleitung des Bussystems sendet, wobei in dem Eigenschaftstelegramm die geänderte Eigenschaft oder der geänderte Parameter, insbesondere der geänderte Wert eines Kommunikationsobjektes, die individuelle Adresse des Installationsgerätes und die allgemein vordefinierte Systemgruppenadresse übertragen werden. Dies bedeutet, dass der Eigenschaftsobjektdienst automatisch ein Eigenschaftstelegramm auf die Busleitung des Bussystems sendet, wenn eine Änderung von Eigenschaften und Parametern, insbesondere des Wertes eines Kommunikationsobjektes, festgestellt wird. Im Unterschied zum zuvor beschriebenen Verfahren weiß der Eigenschaftsobjektdienst anhand des Eigenschaftsobjektes, dass das Senden-Flag bereits gesetzt ist. Hier wird nur eine Änderung von Eigenschaften und Parametern, insbesondere des Wertes, eines Kommunikationsobjektes festgestellt, um automatisch ein Eigenschaftstelegramm auf die Busleitung des Bussystems zu senden.

Bevorzugt ist ferner, wenn die allgemeine vordefinierte Systemgruppenadresse mit dem Eigenschaftsobjektdienst verknüpft wird, und wenn der Eigenschaftsobjektdienst bei Feststellung, dass in der Speichereinheit ein Sende-Flag für ein Kommunikationsobjekt gesetzt worden ist, und/oder bei Feststellung einer Änderung des Wertes eines Kommunikationsobjektes des Installationsgerätes automatisch die allgemein vordefinierte Systemgruppenadresse als Zieladresse des Eigenschaftstelegramms dem Eigenschaftstelegramm beifügt. Hierdurch erfahren die Teilnehmer des Bussystems automatisch die Änderung des Wertes eines Kommunikationsobjektes eines Installationsgerätes.

Ferner ist ein Verfahren bevorzugt, bei dem die allgemeine vordefinierte Systemgruppenadresse mit dem Eigenschaftsobjektdienst verknüpft wird, und bei dem der Eigenschaftsobjektdienst nach dem Empfang eines Eigenschaftstelegramms mit der allgemein vordefinierten Systemgruppenadresse als Zieladresse des Eigenschaftstelegramms eine Eigenschaft oder einen Parameter, insbesondere den Wert, eines Kommunikationsobjektes ändert. Hierdurch kann bei Empfang eines Eigenschaftstelegramms eine Eigenschaft oder ein Parameter, insbesondere der Wert, eines Kommunikationsobjektes verändert werden, ohne dass die Gruppenadresse des Kommunikationsobjektes bekannt ist. Der Eigenschaftsobjektdienst erkennt anhand des angelegten Eigenschaftsobjektes für welches Kommunikationsobjekt das Eigenschaftstelegramm bestimmt ist.

Ferner ist ein Verfahren bevorzugt, bei dem der Wert des Kommunikationsobjektes ein binäres Signal ist, und bei dem der Wert des Kommunikationsobjektes auf die Busleitung des Bussystems gesendet wird, wenn das binäre Signal sich ändert. Hierbei kann der Wert zwei vordefinierte Werte annehmen. Beispielsweise kann der Wert eines Lichtschalters "ein" oder "aus" sein. Dabei wird den Zuständen in der Regel der Wert "0" für "aus" und "1" für "ein" zugeordnet. Sobald eine Veränderung des Wertes erfolgt, wird automatisch eine Eigenschaftsmeldung mit dem aktuellen Wert des Ausgangs, d.h. eine "0" oder eine "1", an die Busleitung mit der allgemeinen vordefinierten Systemgruppenadresse als Zieladresse gesendet. Durch die Visualisierungseinrichtung kann beispielsweise angezeigt werden, ob zum aktuellen Zeitpunkt über eine Klimaanlage geheizt bzw. gekühlt wird. In diesem Fall kann der Wert bei geöffnetem Ventil eine "1" und bei geschlossenem Ventil eine "0" sein.

Es ist aber auch denkbar, dass der Wert des Kommunikationsobjektes ein analoges Signal ist, und dass der Wert des Kommunikationsobjektes auf die Busleitung des Bussystems gesendet wird, wenn der Eigenschaftsobjektdienst feststellt, dass ein bestimmbarer Wert des analogen Signals über- oder unterschritten wird oder der Wert sich um einen bestimmten Betrag geändert hat. D.h., der Eigenschaftsobjektdienst sendet ein Eigenschaftstelegramm dann auf die Busleitung, wenn ein bestimmter Wert unter- oder überschritten wird oder der Wert sich um einen bestimmten Wert verändert hat. Dieser Wert kann vorher festgelegt werden bzw. jederzeit verändert werden. Wird beispielsweise eine bestimmte Temperatur überschritten, so wird der Wert eines Ausgangs einer Jalousiesteuerung verändert, so dass beispielsweise die Jalousie geschlossen wird, sobald eine bestimmte Temperatur überschritten wird. Der Wert kann auch gesendet werden, wenn sich der Wert z.B. um 0,5K geändert hat.

Bevorzugt ist ferner ein derartiges Verfahren, bei dem die Eigenschaften und Parameter eines Kommunikationsobjektes, insbesondere der Wert des Kommunikationsobjektes und/oder das oder die gesetzte(n) Flag(s) eines Kommunikationsobjektes durch eine Visualisierungseinrichtung angezeigt werden. Durch die Anzeige der Visualisierungseinrichtung des ausgelesenen Wertes eines Kommunikationsobjektes eines Installationsgerätes erhält der Installateur des Bussystems sofort eine Übersicht über den Wert der Kommunikationsobjekte der an das Bussystem angeschlossenen Installationsgeräte. Durch das automatische Senden des Eigenschaftstelegramms erhält der Installateur immer den aktuellen Wert eines Kommunikationsobjektes eines Installationsgerätes. Die Visualisierungseinrichtung weist vorteilhafterweise eine graphische Anzeigeeinrichtung, insbesondere ein Display, auf.

Die Erfindung bzw. der Stand der Technik wird nun anhand von Ausführungsbeispielen unter Bezugnahme auf die beiliegenden Zeichnungen näher erläutert. Es zeigen:
- Figur 1: eine schematische Darstellung der Kommunikation in einem Installationsgerät gemäß des Standes der Technik;
- Figur 2: eine schematische Darstellung der Kommunikation in einem Installationsgerät nach Implementierung eines Eigenschaftsobjektdienstes;
- Figur 3: eine schematische Darstellung der Kommunikation in einem Installationsgerät gemäß des Standes der Technik;
- Figur 4: eine schematische Darstellung der Kommunikation in einem Installationsgerät nach Implementierung eines Eigenschaftsobjektdienstes.

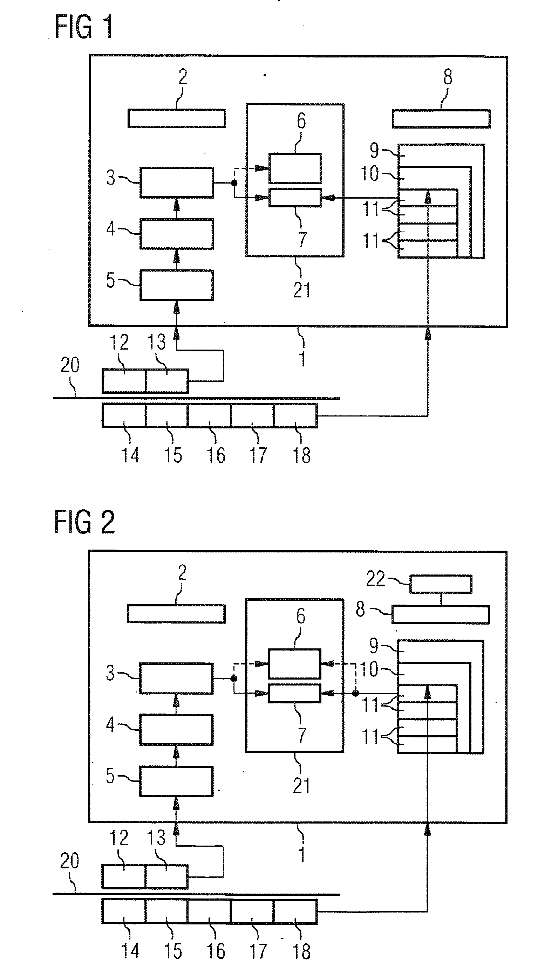

In der Fig. 1 ist eine schematische Darstellung der Kommunikation in einem Installationsgerät 1 gemäß des Standes der Technik gezeigt. Bei diesem bekannten Verfahren zum Schreiben eines Wertes 7 eines Kommunikationsobjektes 2 eines an eine Busleitung 20 eines Bussystems angeschlossenen Installationsgerätes 1 wird ein Wert 13, der über ein gruppenadressiertes Telegramm bzw. über ein so genanntes Eigenschaftstelegramm empfangen wird, über eine Gruppenadresstabelle 5 und eine Assoziationstabelle 4 auf ein oder mehrere Kommunikationsobjekte 2 geschrieben. Dabei wird über einen Eintrag in der Kommunikationstabelle 3 bestimmt, wohin der Wert 13 in der Speichereinheit 21 des Installationsgerätes 1 geschrieben werden soll. Der in die Speichereinheit 21 geschriebene Wert ist mit dem Bezugszeichen 7 gekennzeichnet. Gleichzeitig wird einem nicht dargestellten Anwendungsprogramm mit dem Setzen eines oder mehrerer Flags 6 signalisiert, dass ein neuer Wert 7 für das Kommunikationsobjekt 2 empfangen wurde. Damit der Wert 13 dem Kommunikationsobjekt 2 in der Speichereinheit 21 zugeordnet werden kann muss eine Gruppenadresse des Kommunikationsobjektes 2 zugeordnet sein. Dies erfordert erhöhten Aufwand, den es gilt zu vermeiden.

Das Eigenschaftsobjekt 8 und die Zuordnung dieses Eigenschaftsobjektes 8 zu der Speichereinheit 21 des Installationsgerätes 1 mit dem Wert 7 eines Kommunikationsobjektes 2 muss heutzutage explizit vom Hersteller vorgegeben werden, d.h. bei der Erstellung eines Anwendungsprogramms entsprechend angelegt werden. Ist ein solches Eigenschaftsobjekt 8 entsprechend angelegt, wird ein Wert 13, der über einen nicht dargestellten Eigenschaftsdienst empfangen wurde, in die Speichereinheit 21 geschrieben, jedoch werden die Flags 6 dort nicht verändert. Die aus dem Stand der Technik bekannten Eigenschaftsdienste sind jedoch nicht in der Lage die Flags 6 in der Speichereinheit 21 zu verändern. Damit kann ein Anwendungsprogramm nicht erkennen, dass ein Kommunikationsobjekt 2 einen neuen Wert 7 angenommen hat.

Fig. 2 zeigt eine schematische Darstellung der Kommunikation in einem Installationsgerät 1 nach Implementierung eines erfindungsgemäßen Eigenschaftsobjektdienstes 22. Der Eigenschaftsobjektdienst 22 kann die in der Speichereinheit 21 des Installationsgerätes 1 gespeicherten Eigenschaften oder Parameter 6 ,7 des Installationsgerätes1, insbesondere die Anzahl und Art der Kommunikationsobjekte 2 des Installationsgerätes 1 und/oder den Wert 7 der Kommunikationsobjekte 2 des Installationsgerätes 1, auslesen und/oder beschreiben.

Mit der Implementierung des Eigenschaftsobjektdienstes 22 wird automatisch ein Eigenschaftsobjekt 8 für die Kommunikationsobjekte 2 des Installationsgerätes 1, wobei das Eigenschaftsobjekt 8 mit der Speichereinheit 21 des Installationsgerätes 1 verzweigt ist, angelegt. Nach dem Empfang eines Wertes 18 für ein Kommunikationsobjekt 2 durch den Eigenschaftsobjektdienst 22 schreibt der Eigenschaftsobjektdienst 22 anhand von Einträgen in dem Eigenschaftsobjekt 8 den empfangenen Wert 18 in die für das Kommunikationsobjekt 2 vorgesehenen Speicherstelle in der Speichereinheit 21. Der in die vorgesehene Speicherstelle in der Speichereinheit 21 geschriebene Wert des Kommunikationsobjektes 2 ist durch das Bezugszeichen 7 gekennzeichnet. Ferner setzt der Eigenschaftsobjektdienst 22 ein Flag 6 zur Steuerung des Zugriffs auf den Wert 7 des Kommunikationsobjektes 2.

Das Betriebssystem des Installationsgerätes 1 wird so erweitert, dass der Eigenschaftsobjektdienst 22 bei Empfang eines Wertes 18 nicht nur den Wert 7, sondern auch das Flag oder die Flags 6 für das Kommunikationsobjekt 2 setzt. Weiterhin wird das Betriebssystem des Installationsgerätes 1 so erweitert, dass automatisch für die Kommunikationsobjekte 2 ein Eigenschaftsobjekt 8 angelegt wird. Damit wertet ein nicht dargestelltes Anwendungsprogramm den Wert 7 eines Kommunikationsobjektes 2 auch dann aus, wenn dieser Wert 7 nur über einen Eigenschaftsobjektdienst 22 geändert wurde. Über denselben Eigenschaftsobjektdienst 22 kann der Wert 7 eines Kommunikationsobjektes 2 ausgelesen werden, ohne dass dem Kommunikationsobjekt 2 eine Gruppenadresse zugewiesen worden sein muss.

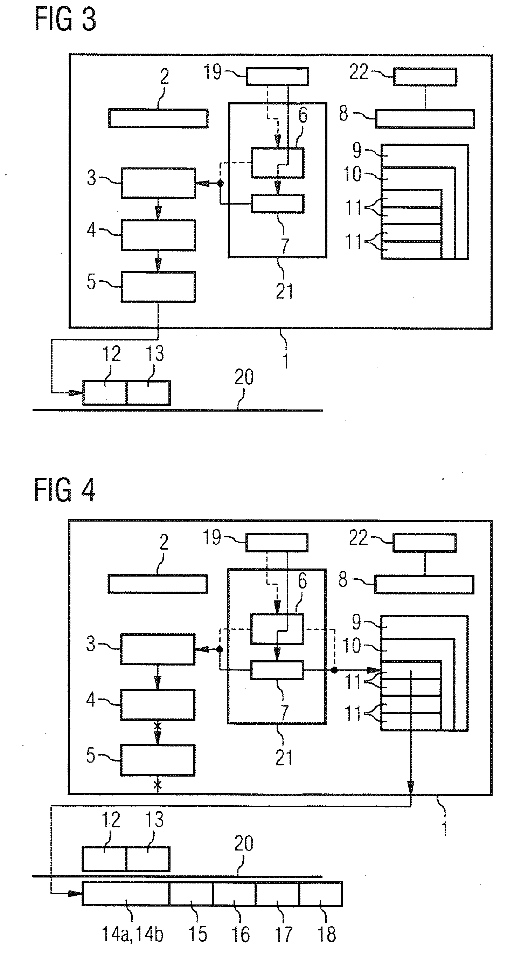

Fig. 3 zeigt wiederum eine schematische Darstellung der Kommunikation in einem Installationsgerät 1 gemäß des Standes der Technik. Wenn der Wert 7 eines Kommunikationsobjektes 2 von einem Anwendungsprogramm 19 geändert wird, wird ein Flag 6 gesetzt, mit dem das Senden des Wertes 7 über eine dem Kommunikationsobjekt 2 zugeordnete Gruppenadresse 12 eingeleitet wird. Wurde keine Gruppenadresse 12 zugewiesen, kann auch kein Wert 7 des Kommunikationsobjektes 2 auf die Busleitung 20 des Bussystems gesendet werden. Der gesendete Wert ist durch das Bezugszeichen 13 gekennzeichnet.

Fig. 4 zeigt eine schematische Darstellung der Kommunikation in einem Installationsgerät 1 nach Implementierung eines erfindungsgemäßen Eigenschaftsobjektdienstes 22. Der Eigenschaftsobjektdienst 22 sendet dann den Wert 7 eines Kommunikationsobjektes 2 auf eine vordefinierte Systemgruppenadresse 14b sendet, wenn das entsprechende Flag 6 zum Senden gesetzt wurde. Vorzugsweise findet dieses Senden nur dann automatisch auf die vordefinierte Systemgruppenadresse 14b statt, wenn dem Kommunikationsobjekt 2 keine Gruppenadresse 12 zugewiesen wurde. D.h., das Senden eines durch ein Anwendungsprogramm 19 geänderten Wertes 7 eines Kommunikationsobjektes 2, erfolgt nicht über die Kommunikationstabelle 3, die Assoziationstabelle 4 sowie die Gruppenadresstabelle 5, da dem Installationsgerät 1 keine Gruppenadresse zugeordnet worden ist, sondern über den Eigenschaftsobjektdienst 22. Der Eigenschaftsobjektdienst 22 überträgt den Wert 7 eines Kommunikationsobjektes 2 über eine allgemein vordefinierte Systemgruppenadresse 14b, ohne das dem oder den Kommunikationsobjekt(en) 2 Gruppenadressen 12 zugewiesen worden sind. Dabei kann der Wert 7 eines Kommunikationsobjektes 2 über den Eigenschaftsobjektdienst 22 über die allgemein vordefinierte Systemgruppenadresse 14b an alle anderen an die Busleitung 20 angeschlossenen Installationsgeräte, deren Kommunikationsobjekte vorzugsweise in Anzahl und Anordnung identisch sind, übertragen werden. Der über die allgemein vordefinierte Systemgruppenadresse 14b auf die Busleitung 20 übertragene Wert 7 des Kommunikationsobjektes 3 ist mit dem Bezugszeichen 18 gekennzeichnet worden. Über die Busleitung 20 können ferner weitere Eigenschaften oder Parameter, wie Adresstabellen, Objektzeiger 9, Objekteigenschaften 10, sonstige Zeiger 11 oder Basisfunktionen des Installationsgerätes 1 ausgelesen werden. Die Übertragung dieser Eigenschaften oder Parameter auf die Busleitung 20 ist durch die Bezugszeichen 15, 16 und 17 gekennzeichnet.

### Bezugszeichenliste

- 1: Installationsgerät
- 2: Kommunikationsobjekt
- 3: Kommunikationstabelle
- 4: Assoziationstabelle
- 5: Gruppenadresstabelle
- 6: Flag(s)
- 7: Wert des Kommunikationsobjektes
- 8: Eigenschaftsobjekt
- 9: Objektzeiger
- 10: Objekteigenschaft
- 11: sonstige Zeiger
- 12: Gruppenadresse
- 13: Wert des Kommunikationsobjektes
- 14a: individuelle Adresse
- 14b: allgemein vordefinierte Systemgruppenadresse
- 15: Objektzeiger
- 16: Objekteigenschaft
- 17: sonstige Zeiger
- 18: Wert des Kommunikationsobjektes
- 19: Anwendungsprogramm
- 20: Busleitung
- 21: Speichereinheit
- 22: Eigenschaftsobjektdienst

## Patentansprüche

1. Verfahren zum Schreiben eines Wertes (7, 18) eines Kommunikationsobjektes (2) eines an ein Bussystem angeschlossenen Installationsgerätes, dem über eine Programmiereinrichtung mittels einer Programmiersoftware eine individuelle Adresse zugeordnet wurde wobei dem Kommunikationsobjekt keine Gruppenadresse vergeben wird, **gekennzeichnet durch** folgende Schritte:
a) in das Betriebssystem des Installationsgerätes (1) wird ein Eigenschaftsobjektdienst (22) implementiert, der den in einer Speichereinheit (21) des Installationsgerätes (1) gespeicherten Wert (7) des Kommunikationsobjektes (2) des Installationsgerätes (1) auslesen und beschreiben kann;
b) Anlegen eines Eigenschaftsobjektes (8) für das Kommunikationsobjekt (2) des Installationsgerätes (1), wobei das Eigenschaftsobjekt (8) mit der Speichereinheit (21) des Installationsgerätes (1) verknüpft ist,
c) nach Empfang eines Wertes (7, 18) für ein Kommunikationsobjekt (2) **durch** den Eigenschaftsobjektdienst (22) schreibt der Eigenschaftsobjektdienst (22) anhand von Einträgen in dem Eigenschaftsobjekt (8) den empfangenen Wert (7, 18) in die für das Kommunikationsobjekt (2) vorgesehene Speicherstelle in der Speichereinheit (21) und setzt ein Flag (6) zur Steuerung des Zugriffs auf den Wert (7) des Kommunikationsobjektes (2).

2. Verfahren nach Anspruch 1, **dadurch gekennzeichnet, dass** dem Betriebssystem des Installationsgerätes (1) eine allgemeine vordefinierte Systemgruppenadresse (14b) zugeordnet wird und dass der Eigenschaftsobjektdienst (22) nach der Feststellung, dass in der Speichereinheit (21) das Flag (6) für das Kommunikationsobjekt (2) gesetzt worden ist, automatisch ein Eigenschaftstelegramm auf die Busleitung (20) des Bussystems sendet, wobei in dem Eigenschaftstelegramm der Wert (7, 18) des Kommunikationsobjektes (2), die individuelle Adresse (14a) des Installationsgerätes (1) und die allgemein vordefinierte Systemgruppenadresse (14b) übertragen werden.

3. Verfahren nach Anspruch 2, **dadurch gekennzeichnet, dass** der Eigenschaftsobjektdienst (22) nach der Feststellung einer Änderung des Wertes (7) des Kommunikationsobjektes (2) automatisch das Eigenschaftstelegramm auf die Busleitung (20) des Bussystems sendet, wobei in dem Eigenschaftstelegramm der geänderte Wert (7) des Kommunikationsobjektes (2), die individuelle Adresse (14a) des Installationsgerätes (1) und die allgemein vordefinierte Systemgruppenadresse (14b) übertragen werden.

4. Verfahren nach einem der Ansprüche 2 oder 3, **dadurch gekennzeichnet, dass** die allgemeine vordefinierte Systemgruppenadresse (14b) mit dem Eigenschaftsobjektdienst (22) verknüpft wird, und dass der Eigenschaftsobjektdienst (22) bei Feststellung, dass in der Speichereinheit (21) das Flag (6) für das Kommunikationsobjekt (2) gesetzt worden ist, und/oder bei Feststellung einer Änderung des Wertes (7) des Kommunikationsobjektes (2) des Installationsgerätes (1) automatisch die allgemein vordefinierte Systemgruppenadresse (14b) als Zieladresse des Eigenschaftstelegramms dem Eigenschaftstelegramm beifügt.

5. Verfahren nach einem der Ansprüche 2 bis 4, **dadurch gekennzeichnet, dass** die allgemeine vordefinierte Systemgruppenadresse (14b) mit dem Eigenschaftsobjektdienst (22) verknüpft wird, und dass der Eigenschaftsobjektdienst (22) nach dem Empfang des Eigenschaftstelegramms mit der allgemein vordefinierten Systemgruppenadresse (14b) als Zieladresse des Eigenschaftstelegramms den Wert (7) des Kommunikationsobjektes (2) ändert.

6. Verfahren nach einem der Ansprüche 2 bis 5, **dadurch gekennzeichnet, dass** der Wert (7) des Kommunikationsobjektes (2) ein binäres Signal ist, und dass der Wert (7) des Kommunikationsobjektes (2) auf die Busleitung (20) des Bussystems gesendet wird, wenn das binäre Signal sich ändert.

7. Verfahren nach einem der Ansprüche 2 bis 5, **dadurch gekennzeichnet, dass** der Wert (7) des Kommunikationsobjektes (2) ein analoges Signal ist, und dass der Wert (7) des Kommunikationsobjektes (2) auf die Busleitung (20) des Bussystems gesendet wird, wenn der Eigenschaftsobjektdienst (22) feststellt, dass ein bestimmbarer Wert des analogen Signals überoder unterschritten wird oder der Wert (7) sich um einen bestimmten Betrag geändert hat.

8. Verfahren nach Anspruch 1 bis 7, **dadurch gekennzeichnet, dass** der Wert (7) des Kommunikationsobjektes (2) und/oder das gesetzte Flag (6) des Kommunikationsobjektes (2) durch eine Visualisierungseinrichtung angezeigt werden.

## Claims

1. Method for writing a value (7, 18) of a communication object (2) of an installation device connected to a bus system that was assigned an individual address via a programming facility by means of programming software, with the communication object not being issued with a group address, **characterised by** the following steps:
a) A property object service (22) is implemented in the operating system of the installation device (1) which can read out and/or write the value (7) of the communication object (2) of the installation device (1) stored in a memory unit (21) of the installation device (1);
b) Creation of a property object (8) for the communication object (2) of the installation device (1), with the property object (8) being linked to the memory unit (21) of the installation device (1),
c) After receipt of a value (7, 18) for a communication object (2) by the property object service (22), the property object service (22), on the basis of entries in the property object (8,) writes the received value (7, 18) into the memory location provided for the communication object (2) in the memory unit (21) and sets a flag (6) to control access to the value (7) of the communication object (2).

2. Method according to claim 1, **characterised in that** the operating system of the installation device (1) is assigned a generally-predefined system group address (14b) and that the property object service (22), after establishing that the flag (6) for a communication object (2) has been set in the memory unit (21), automatically sends a property telegram on the bus (20) of the system, with the value (7, 18) of the communication object (2), the individual address (14a) of the installation device (1) and the generally-predefined system group address (14b) being transmitted in the property telegram.

3. Method according to claim 2, **characterised in that** the property object service (22), after establishing a change in the value (7) of a communication object (2), automatically sends the property telegram on the bus (20) of the bus system, with the changed value (7) of a communication object (2), the individual address (14a) of the installation device (1) and the generally-predefined system group address (14b) being transmitted in the property telegram.

4. Method according to one of claims 2 or 3, **characterised in that** the generally-predefined system group address (14b) is linked to the property object service (22) and that the property object service (22), on establishing that the flag (6) has been set for a communication object (2) in the memory unit (21), and/or on establishing a change in the value (7) of a communication object (2) of the installation device (1), automatically adds the generally-predefined system group address (14b) as destination address of the property telegram to the property telegram.

5. Method according to one of claims 2 to 4, **characterised in that** the generally-predefined system group address (14b) is linked to the property object service (22), and that the property object service (22), after receiving a property telegram with a generally-predefined system group address (14b) as the destination address of the property telegram, changes the value (7), of the communication object (2).

6. Method according to one of claims 2 to 5, **characterised in that** the value (7) of the communication object (2) is a binary signal, and that the value (7) of the communication object (2) is sent on the bus (20) of the bus system when the binary signal changes.

7. Method according to one of claims 2 to 5, **characterised in that** the value (7) of the communication object (2) is an analogue signal, and that the value (7) of the communication object (2) is sent on the bus (20) of the bus system if the property object service (22) establishes that a definable value of the analogue signal will be undershot or exceeded or that the value (7) has changed by a specific amount.

8. Method according to claim 1 to 7, **characterised in that** the value (7) of the communication object (2) and/or the set flag (6) of a communication object (2) will be displayed by a visualization facility.

## Revendications

1. Procédé d'écriture d'une valeur (7, 18) d'un objet de communication (2) d'un appareil d'installation connecté à un système de bus et auquel une adresse individuelle a été affectée via un dispositif de programmation au moyen d'un logiciel de programmation, une adresse de groupe n'étant pas attribuée à l'objet de communication, **caractérisé par** les étapes suivantes :
a) dans le système d'exploitation de l'appareil d'installation (1) est implémenté un service d'objets de caractéristiques (22) qui peut lire et écrire la valeur (7) de l'objet de communication (2) de l'appareil d'installation (1) qui est stockée dans une unité de mémoire (21) de l'appareil d'installation (1) ;
b) création d'un objet de caractéristiques (8) pour l'objet de communication (2) de l'appareil d'installation (1), l'objet de caractéristiques (8) étant associé à l'unité de mémoire (21) de l'appareil d'installation (1) ;
c) après la réception d'une valeur (7, 18) pour un objet de communication (2) par le service d'objets de caractéristiques (22), le service d'objets de caractéristiques (22) écrit, à l'aide d'entrées dans l'objet de caractéristiques (8), la valeur reçue (7, 18) dans l'emplacement de mémoire prévu pour l'objet de communication (2) dans l'unité de mémoire (21) et met en place un drapeau (6) pour la commande de l'accès à la valeur (7) de l'objet de communication (2).

2. Procédé selon la revendication 1, **caractérisé en ce qu'**une adresse de groupe du système généralement prédéfinie (14b) est affectée au système d'exploitation de l'appareil d'installation (1) et **en ce que** le service d'objets de caractéristiques (22), après la constatation de la mise en place du drapeau (6) pour l'objet de communication (2) dans l'unité de mémoire (21), émet automatiquement un télégramme de caractéristiques sur la ligne de bus (20) du système de bus, la valeur (7, 18) de l'objet de communication (2), l'adresse individuelle (14a) de l'appareil d'installation (1) et l'adresse de groupe du système généralement prédéfinie (14b) étant transmises dans le télégramme de caractéristiques.

3. Procédé selon la revendication 2, **caractérisé en ce que** le service d'objets de caractéristiques (22), après la constatation d'une modification de la valeur (7) de l'objet de communication (2), émet automatiquement le télégramme de caractéristiques sur la ligne de bus (20) du système de bus, la valeur modifiée (7) de l'objet de communication (2), l'adresse individuelle (14a) de l'appareil d'installation (1) et l'adresse de groupe du système généralement prédéfinie (14b) étant transmises dans le télégramme de caractéristiques.

4. Procédé selon l'une des revendications 2 ou 3, **caractérisé en ce que** l'adresse de groupe du système généralement prédéfinie (14b) est associée au service d'objets de caractéristiques (22) et **en ce que** le service d'objets de caractéristiques (22), à la constatation de la mise en place du drapeau (6) pour l'objet de communication (2) dans l'unité de mémoire (21) et/ou à la constatation d'une modification de la valeur (7) de l'objet de communication (2) de l'appareil d'installation (1), ajoute automatiquement au télégramme de caractéristiques l'adresse de groupe du système généralement prédéfinie (14b) en tant qu'adresse de destination du télégramme de caractéristiques.

5. Procédé selon l'une des revendications 2 à 4, **caractérisé en ce que** l'adresse de groupe du système généralement prédéfinie (14b) est associée au service d'objets de caractéristiques (22) et **en ce que** le service d'objets de caractéristiques (22), après la réception du télégramme de caractéristiques avec l'adresse de groupe du système généralement prédéfinie (14b) en tant qu'adresse de destination du télégramme de caractéristiques, modifie la valeur (7) de l'objet de communication (2).

6. Procédé selon l'une des revendications 2 à 5, **caractérisé en ce que** la valeur (7) de l'objet de communication (2) est un signal binaire et **en ce que** la valeur (7) de l'objet de communication (2) est émise sur la ligne de bus (20) du système de bus lorsque le signal binaire se modifie.

7. Procédé selon l'une des revendications 2 à 5, **caractérisé en ce que** la valeur (7) de l'objet de communication (2) est un signal analogique et **en ce que** la valeur (7) de l'objet de communication (2) est émise sur la ligne de bus (20) du système de bus lorsque le service d'objets de caractéristiques (22) constate qu'une valeur déterminable du signal analogique est dépassée par le haut ou par le bas ou que la valeur (7) s'est modifiée d'une valeur absolue déterminée.

8. Procédé selon la revendication 1 à 7, **caractérisé en ce que** la valeur (7) de l'objet de communication (2) et/ou le drapeau mis en place (6) de l'objet de communication (2) sont affichés par un dispositif de visualisation.
